# EUROPEAN PATENT APPLICATION

(11) **EP 4 492 248 A1**
(43) Date of publication of application: **15.01.2025**
(21) Application number: 23787616.4
(22) Date of filing: 08.04.2023
(51) Int. Cl.: G06F 13/10

(54) **OPTICAL TRANSMISSION DEVICE, SERVICE DEVICE, AND SERVICE TRANSMISSION METHOD AND SYSTEM**

(30) Priority: 14.04.2022 CN 202210391700
(71) Applicant: Huawei Technologies Co., Ltd., Shenzhen, Guangdong 518129 (CN)
(72) Inventor: CHEN, Yuanhua, Shenzhen, Guangdong 518129 (CN); LOU, Jun, Shenzhen, Guangdong 518129 (CN); XU, Qiming, Shenzhen, Guangdong 518129 (CN)
(74) Representative: Thun, Clemens
(86) International application number: PCT/CN2023/087167
(87) International publication number: WO 2023/197972

(57) **Abstract**

This application provides an optical transmission device, a service device, and a service transmission method and system. The optical transmission device includes a first transceiver, an optical transceiver module, and a processor. The first transceiver is configured to receive a service packet from a switch. The optical transceiver module is configured to send the service packet to a target optical transmission device. The processor is configured to obtain status information of an optical transmission path for transmitting the service packet, and send the status information of the optical transmission path to the service device. The service device is configured to generate the service packet. According to the optical transmission device provided in this application, when a transmission exception occurs on the optical transmission path, the transmission exception can be quickly learned of, so that the system can take a corresponding measure to ensure normal transmission of the service packet. This implements fast service switching, and improves system performance.

## Description

This application claims priority to Chinese Patent Application No. 202210391700.2, filed with the China National Intellectual Property Administration on April 14, 2022 and entitled "OPTICAL TRANSMISSION DEVICE, SERVICE DEVICE, AND SERVICE TRANSMISSION METHOD AND SYSTEM", which is incorporated herein by reference in its entirety.

### TECHNICAL FIELD

This application relates to the field of optical transmission technologies, and more specifically, to an optical transmission device, a service device, and a service transmission method and system.

### BACKGROUND

Currently, a transmission fault between data centers is resolved by mainly using, for example, a storage input/output (Input/Output, I/O) link sub-health detection technology or an active-active arbitration technology. However, in these technical solutions, a status of a transmission path is sensed by exchanging information between storage devices. Complexity, efficiency, and reliability of these technical solutions cannot meet application requirements.

Therefore, how to quickly cope with a case in which a transmission exception occurs on the transmission path to improve system performance becomes an urgent problem to be resolved.

### SUMMARY

Embodiments of this application provide an optical transmission device, a service device, a service transmission method and system. The optical transmission device can obtain status information of a transmission path in a timely manner, and a corresponding measure is taken based on the status information of the transmission path, to ensure normal transmission of a service packet, and implement fast I/O link switching. Therefore, system performance is improved. In addition, the optical transmission device provided in embodiments of this application may perform fault learning based on performance information reported by the service device and a switching status of an I/O link. According to this learning process, when a service path is abnormally faulty, fast I/O link switching can be implemented. Therefore, I/O link switching efficiency is improved, a delay is reduced, and system performance reliability is ensured.

According to a first aspect, an embodiment of this application provides an optical transmission device. The device includes a first transceiver, an optical transceiver module, and a processor. The first transceiver is configured to receive a service packet from a switch. The optical transceiver module is configured to send the service packet to a target optical transmission device. The processor is configured to: obtain status information of an optical transmission path for transmitting the service packet, and send the status information of the optical transmission path to a service device, where the service device is configured to generate the service packet.

It should be noted that, the status information of the optical transmission path in this embodiment of this application may be a case in which a transmission exception, such as a jitter, a drop in optical power, an increase in a bit error rate, an intermittent disconnection, or interruption, occurs on the optical transmission path.

For example, in this embodiment of this application, the service device that generates the service packet may be a storage device.

In addition, the optical transmission path in this embodiment of this application is a path between the transmission device and the target optical transmission device. Alternatively, the optical transmission path may be understood as a path for transmitting the service packet.

Based on the foregoing solution, in this embodiment of this application, the optical transmission device may obtain the status information of the optical transmission path via the processor, and directly determine, by using the status information of the optical transmission path, whether the service packet is normally transmitted on the optical transmission path. Therefore, a case in which the storage device or the like indirectly obtains the status information of the optical transmission path through detection can be avoided, so that a transmission exception occurring on the transmission path can be detected in a timely manner. Therefore, system performance is improved.

With reference to the first aspect, in some implementations of the first aspect, the device further includes a second transceiver. That the processor is configured to send the status information of the optical transmission path to a service device specifically includes: The processor is configured to send the status information of the optical transmission path to the service device via the second transceiver. Based on the foregoing solution, the optical transmission device provided in this application can send the status information of the optical transmission path to the service device via the dedicated second transceiver. Therefore, information exchange efficiency is improved.

With reference to the first aspect, in some implementations of the first aspect, the processor is further configured to obtain subscription information. The subscription information indicates the service device to request to subscribe to the status information of the optical transmission path. Based on the foregoing solution, the optical transmission device provided in this embodiment of this application may learn of, by using the subscription information, a device that subscribes to the status information of the optical transmission path, to send the status information of the optical transmission path to the subscription device in a targeted manner. Therefore, a transmission resource is effectively used.

With reference to the first aspect, in some implementations of the first aspect, the processor is further configured to send input/output I/O link switching indication information. The I/O link switching indication information indicates the service device to switch from a first I/O link to a second I/O link. The first I/O link is a link carrying the service packet, and the second I/O link is a protection link of the first I/O link. Based on the foregoing solution, the optical transmission device provided in this embodiment of this application may directly indicate, by using the I/O link switching indication information, the service device to perform I/O link switching. Therefore, I/O link switching efficiency of the service device is improved, and the system performance is further improved.

According to a second aspect, an embodiment of this application provides a service device. The service device includes a transceiver and a processor. The transceiver is configured to: send a service packet, receive status information of a first optical transmission path from a first optical transmission device, receive status information of a second optical transmission path from a second optical transmission device, and send the status information of the first optical transmission path and the status information of the second optical transmission path to the processor. The processor is configured to determine, based on the status information of the first optical transmission path and the status information of the second optical transmission path, whether to perform input/output I/O link switching.

Based on the foregoing solution, the service device provided in this embodiment of this application determines, by receiving status information of an optical transmission path from an optical transmission device, whether to perform I/O link switching. This avoids a process of indirectly detecting a status of the optical transmission path via a detection module of the service device. Therefore, processing efficiency of the service device is improved.

With reference to the second aspect, in some implementations of the second aspect, the status information of the first optical transmission path indicates that a transmission exception occurs on the first optical transmission path, the status information of the second optical transmission path indicates that the second optical transmission path is not faulty, and the processor is configured to switch from a first I/O link to a second I/O link. The first I/O link is a link carrying the service packet, and the second I/O link is a protection link of the first I/O link.

With reference to the second aspect, in some implementations of the second aspect, the status information of the first optical transmission path indicates that the first optical transmission path is faulty, the status information of the second optical transmission path indicates that the second optical transmission path is faulty, and the processor is configured to send arbitration request information to a quorum server. The arbitration request information is used to request to perform arbitration on the service device.

With reference to the second aspect, in some implementations of the second aspect, the transceiver is further configured to receive I/O link switching indication information from the first optical transmission device. The I/O link switching indication information indicates the service device to switch from the first I/O link to the second I/O link. The first I/O link is the link carrying the service packet, and the second I/O link is the protection link of the first I/O link. Based on the foregoing solution, the service device provided in this embodiment of this application implements I/O link switching by receiving the I/O link switching indication information. Therefore, I/O link switching efficiency of the service device is improved.

With reference to the second aspect, in some implementations of the second aspect, that the transceiver is configured to receive status information of a first optical transmission path from a first optical transmission device specifically includes: The transceiver is configured to receive the status information of the first optical transmission path from the first optical transmission device sent by a first switch. That the transceiver is configured to receive status information of a second optical transmission path from a second optical transmission device specifically includes: The transceiver is configured to receive the status information of the second optical transmission path from the second optical transmission device sent by a second switch.

With reference to the second aspect, in some implementations of the second aspect, the service device is a storage device, the storage device includes a memory, and the memory is configured to store the service packet.

According to a third aspect, an embodiment of this application provides a service transmission method. The method may be performed by an optical transmission device or a component (such as a chip or a chip system) in an optical transmission device. This is not limited in this application. The method includes: receiving a service packet from a switch, sending the service packet to a target optical transmission device, obtaining status information of an optical transmission path for transmitting the service packet, and sending the status information of the optical transmission path to a service device. The service device is configured to generate the service packet.

With reference to the third aspect, in some implementations of the third aspect, the status information of the optical transmission path is sent to the service device via a transceiver.

With reference to the third aspect, in some implementations of the third aspect, the method further includes: obtaining subscription information. The subscription information indicates the service device to request to subscribe to the status information of the optical transmission path.

With reference to the third aspect, in some implementations of the third aspect, the method further includes: sending input/output I/O link switching indication information. The I/O link switching indication information indicates the service device to switch from a first I/O link to a second I/O link. The first I/O link is a link carrying the service packet, and the second I/O link is a protection link of the first I/O link.

According to a fourth aspect, an embodiment of this application provides a service transmission method. The method may be performed by a service device or a component (such as a chip or a chip system) in a service device. This is not limited in this application. The method includes: sending a service packet; receiving status information of a first optical transmission path from a first optical transmission device, and receiving status information of a second optical transmission path from a second optical transmission device; and determining, based on the status information of the first optical transmission path and the status information of the second optical transmission path, whether to perform input/output I/O link switching.

With reference to the fourth aspect, in some implementations of the fourth aspect, when the status information of the first optical transmission path indicates that a transmission exception occurs on the first optical transmission path, and the status information of the second optical transmission path indicates that the second optical transmission path is not faulty, switching is performed from a first I/O link to a second I/O link. The first I/O link is a link carrying the service packet, and the second I/O link is a protection link of the first I/O link.

With reference to the fourth aspect, in some implementations of the fourth aspect, when the status information of the first optical transmission path indicates that the first optical transmission path is faulty, and the status information of the second optical transmission path indicates that the second optical transmission path is faulty, arbitration request information is sent to a quorum server. The arbitration request information is used to request to perform arbitration on the service device.

It should be noted that, in this embodiment of this application, the transmission exception occurring on the optical transmission path may be a case in which a transmission exception, such as a jitter, a drop in optical power, an increase in a bit error rate, an intermittent disconnection, or interruption occurs on the optical transmission path.

With reference to the fourth aspect, in some implementations of the fourth aspect, the method further includes: receiving I/O link switching indication information from the first optical transmission device. The I/O link switching indication information indicates to switch from the first I/O link to the second I/O link. The first I/O link is the link carrying the service packet, and the second I/O link is the protection link of the first I/O link.

With reference to the fourth aspect, in some implementations of the fourth aspect, the status information of the first optical transmission path from the first optical transmission device sent by a first switch is received. The status information of the second optical transmission path from the second optical transmission device sent by a second switch is received.

With reference to the fourth aspect, in some implementations of the fourth aspect, the method further includes: storing the service packet.

According to a fifth aspect, an embodiment of this application provides a service transmission system. The system includes: a service device, a switch, and the optical transmission device according to any one of the first aspect or the possible implementations of the first aspect. The switch is configured to: receive a service packet from the service device, and send the service packet to the optical transmission device. The service device includes the service device according to any one of the second aspect or the possible implementations of the second aspect.

According to a sixth aspect, an embodiment of this application provides a chip. The chip includes a processor and a communication interface. The communication interface is configured to receive a signal from a communication apparatus other than the communication apparatus and transmit the signal to the processor. The processor executes code instructions to implement the method according to any one of the third aspect or the possible implementations of the third aspect, or implement the method according to any one of the fourth aspect or the possible implementations of the fourth aspect.

According to a seventh aspect, an embodiment of this application provides a computer-readable storage medium. The computer-readable storage medium stores a computer program (which may also be referred to as code or instructions). When the computer program is run on a computer, the computer is enabled to perform the method according to any one of the third aspect or the possible implementations of the third aspect, or the computer is enabled to perform the method according to any one of the fourth aspect or the possible implementations of the fourth aspect.

According to an eighth aspect, an embodiment of this application provides a computer program product. The computer program product includes a computer program. When the computer program is run, a computer is enabled to perform the method according to any one of the third aspect or the possible implementations of the third aspect, or the computer is enabled to perform the method according to any one of the fourth aspect or the possible implementations of the fourth aspect.

For beneficial effects brought by the third aspect to the eighth aspect, refer to descriptions of beneficial effects in the first aspect or the second aspect. Details are not described herein again.

### BRIEF DESCRIPTION OF DRAWINGS

FIG. 1 is a schematic architectural diagram of a data center redundancy system 100 to which an embodiment of this application is applicable;
FIG. 2 is a schematic architectural diagram of another data center redundancy system 200 to which an embodiment of this application is applicable;
FIG. 3 is a schematic diagram of a service transmission system 300 according to an embodiment of this application;
FIG. 4 is a schematic block diagram of function division of a processor 3113 or a processor 3123 according to an embodiment of this application;
FIG. 5 is a schematic block diagram of function division of a processor 3302 according to an embodiment of this application;
FIG. 6 is another schematic block diagram of function division of a processor 3302 according to an embodiment of this application;
FIG. 7 is a schematic structural block diagram of a switch 321 or a switch 322 according to an embodiment of this application;
FIG. 8 is a flowchart of a first training process of an optical transmission device according to an embodiment of this application;
FIG. 9 is a flowchart of a second training process of an optical transmission device according to an embodiment of this application;
FIG. 10 is a schematic diagram of a format of a packet for carrying status information of an optical transmission link to which an embodiment of this application is applicable;
FIG. 11 is a schematic diagram of a service transmission system 1100 according to an embodiment of this application; and
FIG. 12 is a schematic flowchart of a service transmission method 1200 according to an embodiment of this application.

### DESCRIPTION OF EMBODIMENTS

The following describes technical solutions in this application with reference to accompanying drawings. For ease of understanding embodiments of this application, the following descriptions are provided.

First, the terms "include", "have" and any other variants in the following embodiments of this application mean to cover the non-exclusive inclusion. For example, a process, method, system, product, or device that includes a list of steps or units is not necessarily limited to those expressly listed steps or units, but may include other steps or units not expressly listed or inherent to such a process, method, system, product, or device.

Second, in embodiments of this application, the term such as "example", "for example", or the like is used to represent giving an example, an illustration, or a description, and any embodiment or design scheme described as "example" or "for example" should not be construed as more preferred or having more advantages than another embodiment or design scheme. Use of the term such as "example", "for example", or the like is intended to present a related concept in a specific manner for ease of understanding.

Third, in the following text descriptions or accompanying drawings in embodiments of this application, the terms such as "first", "second", and the like, and various numbers are merely used for differentiation for ease of description, do not need to be used to describe a specific order or sequence, and are not used to limit the scope of embodiments of this application. For example, in embodiments of this application, the terms are used to distinguish between different transceivers.

Fourth, in embodiments of this application, a service device may be a device that generates a service packet, for example, may be a storage device. Alternatively, the service device may be a device that transmits and receives the service packet, for example, may be a switch.

Fifth, in embodiments of this application, an example in which switching is performed from an I/O 1 link to an I/O 2 link is used for description. To be specific, when a transmission exception occurs on a working path and a protection path works normally, switching is performed from the I/O 1 link to the I/O 2 link. When transmission on the working path is normal and a transmission exception occurs on the protection path, a method, a device, or a system in this application is also applicable. In this scenario, switching is performed from the I/O 2 link to the I/O 1 link.

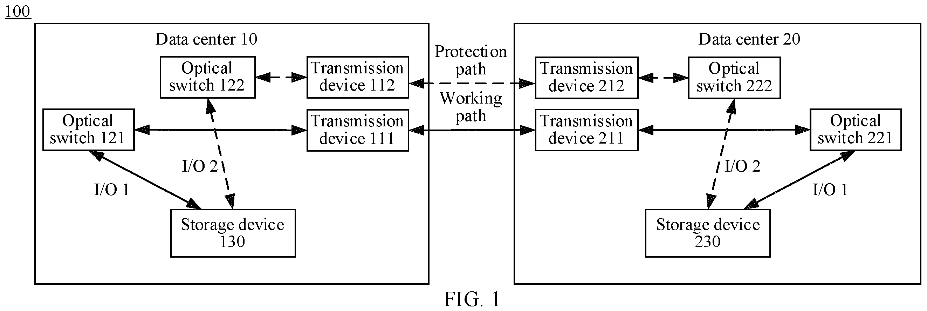

FIG. 1 is a schematic architectural diagram of a data center redundancy system 100 to which an embodiment of this application is applicable. The redundancy system may be understood as a data storage and backup system. As shown in FIG. 1, the system shown in FIG. 1 includes at least two data centers (Data Centers, DCs): a data center 10 and a data center 20. The data center 10 includes a transmission device 111, a transmission device 112, an optical switch 121, an optical switch 122, and a storage device 130. The data center 20 includes a transmission device 211, a transmission device 212, an optical switch 221, an optical switch 222, and a storage device 230.

When the system works normally, the storage device 130 in the data center 10 generates one or more service packets carrying service data, and sends the service packets over an I/O 1 link and an I/O 2 link in a load balancing manner. The service packets carried on the I/O 1 link and the I/O 2 link are respectively input to the transmission device 111 and the transmission device 112 via the optical switch 121 and the optical switch 122, and are respectively transmitted to the corresponding transmission device 211 and transmission device 212 in the data center 20 through a working path and a protection path. The transmission device 211 sends, via the optical switch 221, a service packet transmitted on the working path to the storage device 230, so that the storage device 230 stores service data. Similarly, the transmission device 212 sends, via the optical switch 222, a service packet transmitted on the protection path to the storage device 230, so that the storage device 230 stores service data.

Generally, data transmission between data centers needs to be performed by using a transmission fiber. Due to uncontrollable conditions such as infrastructure construction and network reconstruction, a working path and a protection path between the data centers are prone to be faulty. Consequently, overall system performance is affected. Currently, to improve system performance and reliability for coping with a case in which a transmission path between the data centers is abnormal, a storage I/O link sub-health detection technology and an active-active arbitration technology are generally used.

FIG. 1 is used as an example to briefly describe the storage I/O link sub-health detection technology.

The storage I/O link sub-health detection technology is an I/O switching process initiated by a storage device when that the system works abnormally is detected via the storage device, for example, when a sub-health state such as a drop to a minimum power threshold in optical power, a bit error or jitter occurs on the working path. To be specific, when the storage device 130 of the data center 10 and the storage device 230 of the data center 20 detect that the system works in the sub-health state, the I/O switching process is initiated, and switching is performed from the I/O 1 that originally runs on the transmission working path to the protection path.

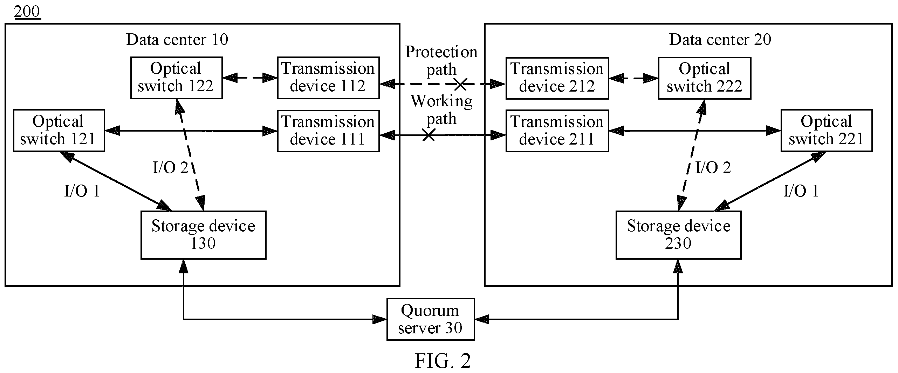

The active-active arbitration technology is applied to a case in which both the working path and the protection path are interrupted, for example, a scenario shown in FIG. 2. In this scenario, when the storage device 130 and the storage device 230 obtain, through detection, that both the working path and the protection path are interrupted, the storage device 130 and the storage device 230 perform protocol interaction with a quorum server 30, and arbitration determining is completed via the quorum server 30. In other words, the quorum server 30 selects the storage device 130 or the storage device 230 to store the service packet.

However, the storage I/O link sub-health detection technology needs to cover devices from a transmitting end to a receiving end, including a plurality of nodes such as a storage port, a switch board, an optical switch port, a transmission board, a transmission port, a transmission link, and the like. To ensure detection integrity and avoid false detection, a fault mode detection mechanism including polling, anti-jitter, and comprehensive multi-indicator detection is needed. This sacrifices detection efficiency to some extent. In addition, for example, a state in which a transmission path is intermittent and a mode in which a fault is non-sub-healthy and detectable (for example, the service packet is abnormal but a heartbeat packet is normal) cannot be accurately detected. In the detection process, the storage device indirectly senses a health state of the transmission working path, and completes the I/O switching process. This consumes long detection time. Consequently, overall switching efficiency is low, and the overall system performance deteriorates.

Similarly, for the active-active arbitration technology, detection of the working path and the protection path also needs long time for the storage device for processing. In addition, during arbitration detection and arbitration processing, service transmission is stopped. Consequently, the overall system performance deteriorates.

In conclusion, for current problems of slow storage I/O switching or switching failure and slow active-active arbitration, this application provides an optical transmission device, a service device, and a service transmission system, to accelerate storage I/O switching and active-active arbitration processes in a scenario in which a transmission service path is faulty. Therefore, system performance is improved.

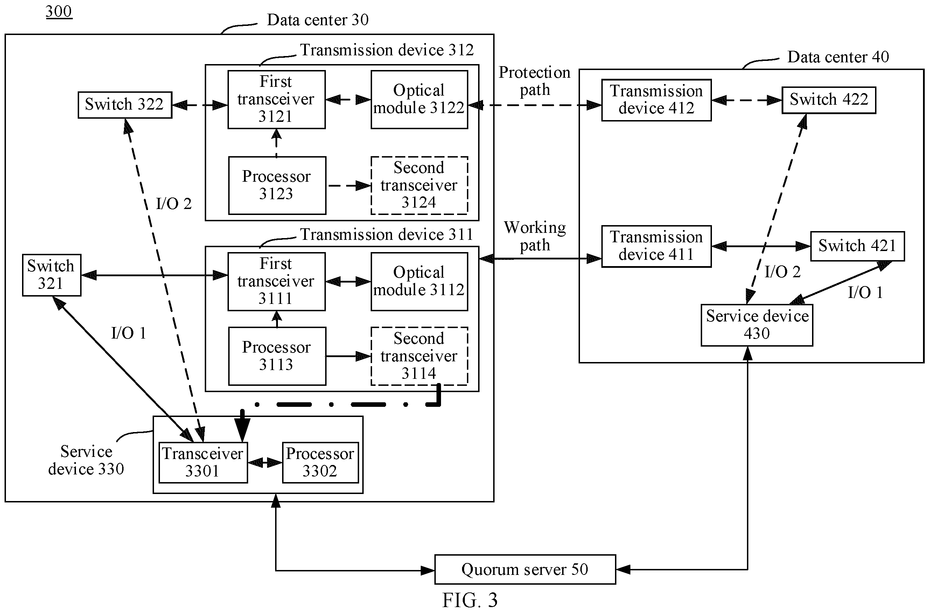

FIG. 3 is a schematic diagram of a service transmission system 300 according to an embodiment of this application. As shown in FIG. 3, the system 300 may be used in the scenario shown in FIG. 1 or FIG. 2. The system 300 includes a data center 30 and a data center 40. The data center 30 includes a transmission device 311, a transmission device 312, a switch 321, a switch 322, and a service device 330. The data center 40 includes a transmission device 411, a transmission device 412, a switch 421, a switch 422, and a service device 430.

Optionally, the system 300 further includes a quorum server 50.

In the following descriptions, the data center 30 is used as a transmitting end, and the data center 40 is used as a receiving end. In addition, without loss of generality, a structure of the data center 30 is used as an example to describe the optical transmission device, the service device, and the service transmission system provided in embodiments of this application.

Specifically, in the data center 30, the transmission device 311 includes a first transceiver 3111, an optical module 3112, and a processor 3113. The transmission device 312 includes a first transceiver 3121, an optical module 3122, and a processor 3123. The service device 330 includes a transceiver 3301 and a processor 3302.

For the transmission device 311, the first transceiver 3111 is configured to receive a service packet from the switch 321. The optical module 3112 is configured to send the service packet received by the first transceiver 3111 to the transmission device 411. The processor 3113 is configured to obtain status information of an optical transmission path, and send the obtained status information of the optical transmission path to the service device 330. After receiving the status information of the optical transmission path, the transceiver 3301 of the service device 330 sends the status information of the optical transmission path to the processor 3302, and the processor 3302 determines, based on the status information of the optical transmission path, whether to perform I/O link switching.

In a feasible implementation, the processor 3113 may transparently send the status information of the optical transmission path to the transceiver 3301 via the switch 321.

In another feasible implementation, the transmission device 311 further includes a second transceiver 3114. The processor 3113 sends the status information of the optical transmission path to the second transceiver 3114, and the status information of the optical transmission path is sent to the transceiver 3301 via the second transceiver 3114. Based on this implementation, the status information of the optical transmission path is sent via the second transceiver 3114, so that transmission efficiency of the status information of the transmission path can be improved, and reliability of transmission of the status information of the transmission path can be ensured.

For example, in embodiments of this application, the status information of the optical transmission path may be information indicating a status of the optical transmission path. In other words, the status information of the optical transmission path may be information that explicitly indicates the optical transmission path, for example, the status of the optical transmission path, including normal transmission and faulty transmission. The faulty transmission may further include one or more pieces of information about parameters such as a drop in optical power, an increase in a bit error rate, an excessively large jitter, even transmission interruption, and the like. Alternatively, different statuses are indicated by using indexes. In another possible implementation, the status information of the optical transmission path may be information that implicitly indicates the optical transmission path. To be specific, a status of the optical transmission path may be indirectly indicated by other information. There is an association relationship between the other information and the status information of the optical transmission path. The association relationship may be known or agreed on in advance. For example, the status of the optical transmission path may be indicated by using an arrangement order (for example, specified in a protocol) of other information transmitted and received between the processor 3113 and the transceiver 3301. Therefore, indication overheads are reduced to some extent. For example, other first information and second information may be transmitted and received between the processor 3113 and the transceiver 3301. When an order of the first information and an order of the second information is exchanged, it indicates that a current status of the optical transmission path is an abnormal transmission state.

For the transmission device 312, a process of information exchange between the transmission device 312 and the service device 330 is the same as that between the transmission device 311 and the service device 330. A difference lies in that the processor 3113 obtains status information of a working path, and the processor 3123 obtains status information of a protection path.

In addition, the switch 321, the switch 322, the switch 421, and the switch 422 provided in embodiments of this application may be electrical switches or optical switches. This is not limited in this application.

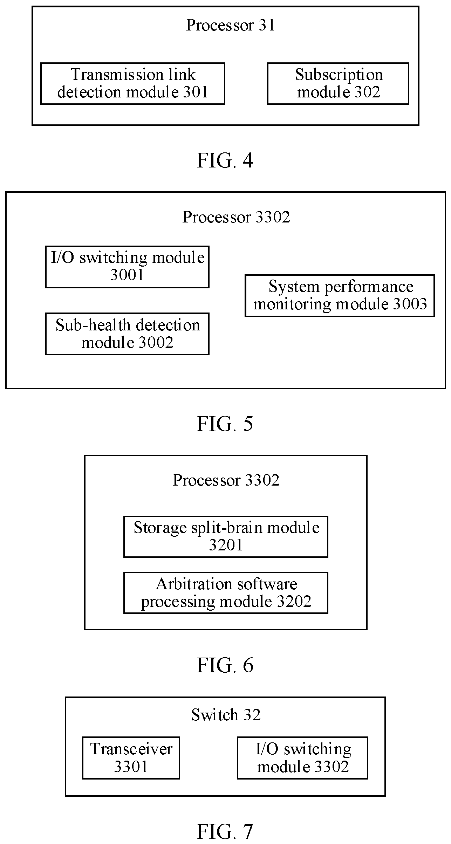

In a feasible implementation, FIG. 4 is a schematic block diagram of function division of a processor 3113 or a processor 3123 according to an embodiment of this application.

For example, as shown in FIG. 4, a processor 31 includes a transmission link detection module 301 and a subscription module 302. Specifically, the transmission link detection module 301 is configured to obtain status information of an optical transmission path. The subscription module 302 is configured to obtain subscription information. The subscription information indicates a service device (for example, the service device 330) that requests to subscribe to the status information of the optical transmission path.

It should be noted that a manner in which the transmission link detection module 301 obtains the status information of the optical transmission path is not limited in this embodiment of this application, and the status information may be directly obtained or indirectly obtained. For example, the transmission link detection module 301 may obtain the status information of the optical transmission path through periodic detection of the transmission link detection module 301. Alternatively, the transmission link detection module 301 may obtain the status information of the optical transmission path by receiving a detection result from an external detection device.

Based on the processor shown in FIG. 4, the transmission device provided in this application can send the status information of the optical transmission path to the service device that subscribes to the status information of the optical transmission path. This can avoid sending the status information of the optical transmission path to all service devices in the system. Therefore, resources are saved and system performance is improved.

In a feasible implementation, FIG. 5 is a schematic block diagram of possible function division of a processor 3302 according to an embodiment of this application. As shown in FIG. 5, the processor 3302 includes an I/O switching module 3001, a sub-health detection module 3002, and a system performance monitoring module 3003. The I/O switching module 3001 is configured to switch an I/O link. The sub-health detection module 3002 is configured to perform detection on a status of an optical transmission path between the data center 30 and the data center 40. The system performance monitoring module 3003is configured to perform monitoring on system performance of the service device 330, for example, an I/O delay, input/output operations per second (input/output operations per second, IOPS), and the like of the service device 330. Specifically, when detecting that the status of the optical transmission path is faulty, the sub-health detection module 3002 may report the detected status information of the optical transmission path to the I/O switching module 3001. The I/O switching module 3001 receives the status information of the optical transmission path, and performs an I/O switching operation.

Based on the foregoing solution, the service device provided in this application can perform I/O switching when receiving a transmission fault from the transmission device, and complete autonomous I/O switching when detecting that the optical transmission path is faulty. The device may still complete the I/O switching in a scenario in which the transmission device cannot send the status information (especially a fault state) of the optical transmission path to the service device. Therefore, stable system performance is ensured.

With reference to FIG. 3 to FIG. 5, service transmission between the data center 30 and the data center 40 is specifically described.

In a feasible implementation, when a transmission link detection module (for example, the transmission link detection module 301) of the processor 3113 obtains that the working path is faulty, and a transmission link detection module (for example, the transmission link detection module 301) of the processor 3123 obtains that the protection path works normally, the processor 3113 and the processor 3123 report, to the transceiver 3301 via the switch 321 and the switch 322 respectively, that the working path is faulty and that the protection path works normally. Alternatively, the processor 3113 and the processor 3123 report, to the transceiver 3301 via the second transceiver 3114 and a second transceiver 3124 respectively, that the working path is faulty and that the protection path works normally. The transceiver 3301 transmits the received status information to the I/O switching module 3001. The I/O switching module 3001 switches a service packet on an I/O 1 to a protection path of an I/O 2, transmits the service packet to the transmission device 412 via the switch 322, the first transceiver 3121, and the optical module 3122, and transmits the service packet to the service device 430 via the switch 422.

In a feasible implementation, when both the working path and the protection path work normally, after the status information received by the transceiver 3301 is transmitted to the I/O switching module 3001, the I/O switching module 3001 is not triggered to perform the I/O switching.

In a feasible implementation, FIG. 6 is another schematic block diagram of possible function division of the processor 3302. As shown in FIG. 6, the processor 3302 includes a storage split-brain module 3201 and an arbitration software processing module 3202. The storage split-brain module 3201 is configured to perform detection on a status of an optical transmission path between the data center 30 and the data center 40. The arbitration software processing module 3202 is configured to send an arbitration request to the quorum server 50. The arbitration request is used to request the quorum server 50 to make an arbitration decision on the service device 330 and the service device 430.

With reference to FIG. 4, FIG. 6, and FIG. 3, service transmission between the data center 30 and the data center 40 is described.

In a feasible implementation, when a transmission link detection module (for example, the transmission link detection module 301) of the processor 3113 obtains that the working path is faulty, and a transmission link detection module (for example, the transmission link detection module 301) of the processor 3123 obtains that the protection path is faulty, the processor 3113 and the processor 3123 report, to the transceiver 3301 via the switch 321 and the switch 322 respectively, that both the working path and the protection path are faulty. Alternatively, the processor 3113 and the processor 3123 report, to the transceiver 3301 via the second transceiver 3114 and a second transceiver 3124 respectively, that both the working path and the protection path are faulty. The transceiver 3301 transmits the received status information to the arbitration software processing module 3202. The arbitration software processing module 3202 sends an arbitration request to the quorum server 50 based on the received status information, and the quorum server 50 makes an arbitration decision on the service device 330 and the service device 430 based on the arbitration request.

In a feasible implementation, when the processor 3113 and the processor 3123 cannot send the status information of the optical transmission path to the transceiver 3301, the storage split-brain module 3201 detects that both the working path and the protection path are disconnected. In this case, the storage split-brain module 3201 sends an arbitration request to the quorum server 50, and the quorum server 50 makes an arbitration decision on the service device 330 and the service device 430 based on the arbitration request.

The service device shown in FIG. 5 and FIG. 6 may be a device that generates a service. For a service device that transmits and receives a service, for example, the switch 321 or the switch 322, the transmission device 311 and the transmission device 312 may respectively send the status information of the optical transmission path to the switch 321 and the switch 322, so that the switch 321 and the switch 322 implement I/O link switching.

With reference to FIG. 4, FIG. 5, and FIG. 3, when the service device is a switch, service transmission between the data center 30 and the data center 40 is described.

In a possible implementation, when a transmission link detection module (for example, the transmission link detection module 301) of the processor 3113 obtains that the working path is faulty, and a transmission link detection module (for example, the transmission link detection module 301) of the processor 3123 obtains that the protection path works normally, the processor 3113 reports, to the switch 321 via the first transceiver 3111, that the working path is faulty. In addition, the processor 3123 reports, to the switch 322 via the first transceiver 3121, that the protection path works normally. In this case, the switch 321 may send indication information to the I/O switching module 3001 of the processor 3302 via the transceiver 3301 of the service device 330, to indicate the I/O switching module 3001 to switch a service packet on an I/O 1 to a protection path of an I/O 2. Alternatively, the switch 322 may send indication information to the I/O switching module 3001 of the processor 3302 via the transceiver 3301 of the service device 330, to indicate the I/O switching module 3001 to switch a service packet on an I/O 1 to a protection path of an I/O 2.

Alternatively, the processor 3113 reports, to the switch 321 through a second transceiver 3114, that the working path is faulty, and the processor 3123 reports, to the switch 322 via a second transceiver 3124, that the protection path works normally. The switch 321 or the switch 322 is enabled to send indication information to the I/O switching module 3001 of the processor 3302 via the transceiver 3301 of the service device 330, to indicate the I/O switching module 3001 to switch a service packet on the I/O 1 to a protection path of an I/O 2.

FIG. 7 is a schematic structural block diagram of a switch 321 or a switch 322 according to an embodiment of this application. Specifically, a switch 32 includes a transceiver 3301 and an I/O switching module 3302. The transceiver 3301 is configured to receive status information of an optical transmission path from a transmission device. The I/O switching module 3302 is configured to implement I/O link switching.

With reference to FIG. 4, FIG. 7, and FIG. 11, when the service device is a switch, service transmission between the data center 30 and the data center 40 is described.

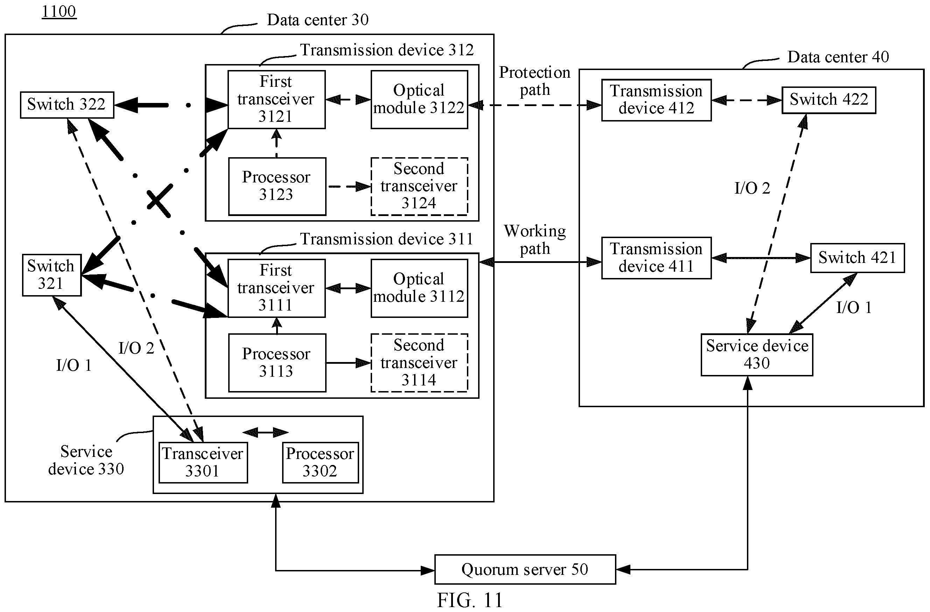

As shown in FIG. 11, both a switch 321 and a switch 322 may receive status information of a transmission path from a transmission device 311 and a transmission device 312. When a transmission link detection module (for example, the transmission link detection module 301) of a processor 3113 obtains that a working path is faulty, and a transmission link detection module (for example, the transmission link detection module 301) of a processor 3123 obtains that a protection path works normally, the processor 3113 and the processor 3123 report, to a transceiver (for example, the transceiver 3301) of the switch 321 and a transceiver (for example, the transceiver 3301) of the switch 322 via a first transceiver 3111 and a first transceiver 3121 respectively, that the working path is faulty and that the protection path works normally. Alternatively, the processor 3113 and the processor 3123 report, to a transceiver (for example, the transceiver 3301) of the switch 321 and a transceiver (for example, the transceiver 3301) of the switch 322 via a second transceiver 3114 and a second transceiver 3124 respectively, that the working path is faulty and that the protection path works normally. An I/O switching module (for example, the I/O switching module 3302) of the switch 321 switches a service packet on an I/O 1 to the protection path.

It can be learned from the foregoing descriptions that, the current data center implements the I/O link switching through indirect detection of a storage device, and efficiency is low. However, disadvantages of implementing I/O link switching are not limited to the foregoing descriptions. In some scenarios in which the optical transmission path is abnormally faulty, for example, in a scenario in which an intermittent bit error occurs, although a service packet of the storage device is lost, a heartbeat packet detected by the storage device may be in a normal state, in other words, the status of the optical transmission path is not identified as a fault state. Therefore, the I/O link switching cannot be implemented, and the system performance cannot be ensured.

For the foregoing problems, embodiments of this application provide the optical transmission device, the service device, and the service transmission system. The optical transmission device establishes a mapping relationship between a fault mode and a performance status of the service device through learning and training of the optical transmission device. Based on the mapping relationship, fast I/O link switching can be implemented, and I/O link switching can still be implemented in the scenario in which the optical transmission path is abnormally faulty, to ensure the system performance.

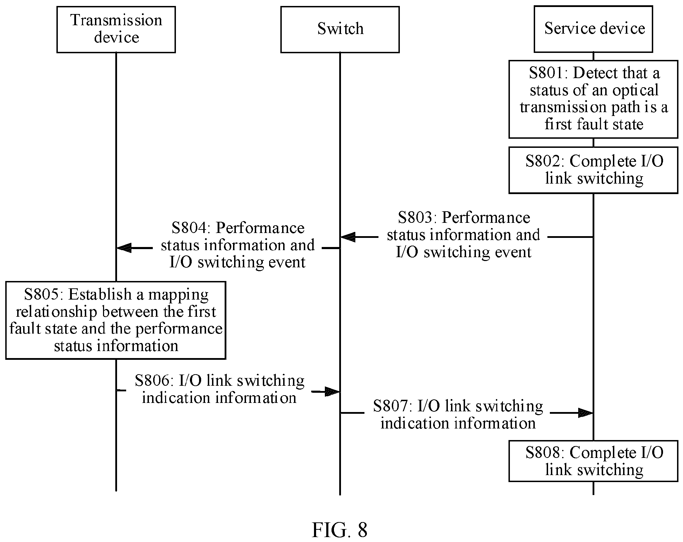

In a possible implementation, with reference to the processor 3302 shown in FIG. 5, the processor 3302 shown in FIG. 6, and the system shown in FIG. 3, a first training process of an optical transmission device (for example, the optical transmission device 311) is described. Specifically, the first training process may include a plurality of steps shown in FIG. 8.

S801: Detect that a status of an optical transmission path is a first fault state.

Specifically, the sub-health detection module 3002 detects that the status of the optical transmission path (a working path) is the first fault state. The first fault state corresponds to a case in which a service packet is abnormally transmitted on the optical transmission path and a heartbeat packet is also abnormally transmitted on the optical transmission path. For example, the case may be a scenario in which continuous bit errors occur on the optical transmission path.

S802: Complete I/O link switching.

Specifically, the I/O switching module 3001 completes the I/O link switching, for example, switches from an I/O 1 link to an I/O 2 link.

S803: Report performance status information and an I/O switching event.

Specifically, the transceiver 3301 reports performance status information and an I/O switching event of the service device 330 that are monitored by the system performance monitoring module 3003 to the switch 321.

S804: Transparently transmit the performance status information and the I/O switching event.

Specifically, the switch 321 transparently transmits the received performance status information and I/O switching event to the first transceiver 3111 of the transmission device 311 on a corresponding path.

S805: Establish a mapping relationship between the first fault state and the performance status information.

Specifically, after receiving the performance status information and the I/O switching event via the first transceiver 3111, the processor 3113 detects, via the transmission link detection module 301, that the current status of the optical transmission path is the first fault state, and the processor 3113 establishes the mapping relationship between the first fault state and the performance status information.

S806: Send I/O link indication switching information.

Specifically, after the transmission device 311 establishes the mapping relationship between the first fault state and the performance status information, when the processor 3113 detects again, via the transmission link detection module 301, that the status of the optical transmission path is the first fault state, the processor 3113 sends the I/O link indication switching information to the switch 321 via the first transceiver 3111. The I/O link indication switching information indicates the service device 330 to perform I/O link switching.

In a feasible implementation, when the processor 3113 detects again, via the transmission link detection module 301, that the status of the optical transmission path is the first fault state, the processor 3113 sends the I/O link indication switching information to the transceiver 3301 of the service device 330 via the second transceiver 3114.

S807: Forward the I/O link indication switching information.

Specifically, the switch 321 transparently transmits the received I/O link indication switching information to the transceiver 3301 of the service device 330.

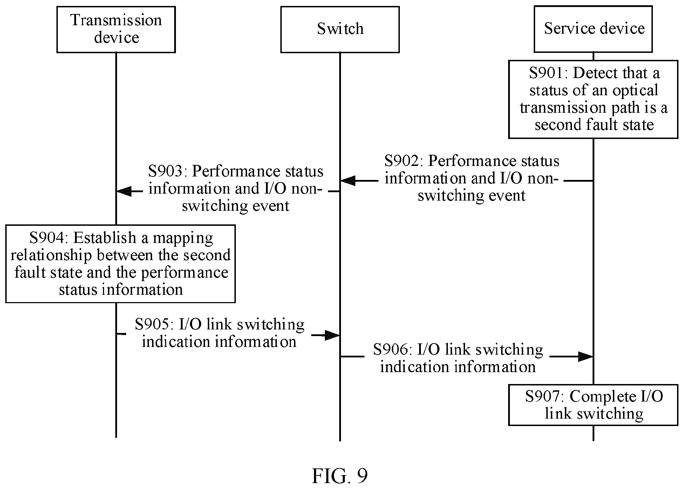

In a possible implementation, with reference to the processor 3302 shown in FIG. 5, the processor 3302 shown in FIG. 6, and the system shown in FIG. 3, a second training process of an optical transmission device (for example, the optical transmission device 311) is described. Specifically, the second training process may include a plurality of steps shown in FIG. 9.

S901: Detect that a status of an optical transmission path is a second fault state.

Specifically, the sub-health detection module 3002 detects that the status of the optical transmission path (a working path) is the second fault state. The second fault state corresponds to a case in which a service packet is abnormally transmitted on the optical transmission path but a heartbeat packet is normally transmitted on the optical transmission path. For example, the case may be a scenario in which an intermittent bit error occurs on the optical transmission path.

It should be noted that, in the scenario of the second fault state, because the sub-health detection module 3002 detects that the heartbeat packet is transmitted normally, the second fault state does not trigger the I/O switching module 3001 to complete I/O link switching.

S902: Report performance status information and an I/O non-switching event.

Specifically, the transceiver 3301 reports performance status information and an I/O non-switching event of the service device 330 that are monitored by the system performance monitoring module 3003 to the switch 321.

S903: Transparently transmit the performance status information and the I/O non-switching event.

Specifically, the switch 321 transparently transmits the received performance status information and I/O non-switching event to the first transceiver 3111 of the transmission device 311 on a corresponding path.

S904: Establish a mapping relationship between the second fault state and the performance status information.

Specifically, after receiving the performance status information and the I/O non-switching event via the first transceiver 3111, the processor 3113 detects, via the transmission link detection module 301, that the current status of the optical transmission path is the second fault state. The processor 3113 establishes the mapping relationship between the second fault state and the performance status information.

S905: Send I/O link indication switching information.

Specifically, after the transmission device 311 establishes the mapping relationship between the second fault state and the performance status information, when the processor 3113 detects again, via the transmission link detection module 301, that the status of the optical transmission path is the second fault state, the processor 3113 sends the I/O link indication switching information to the switch 321 via the first transceiver 3111. The I/O link indication switching information indicates the service device 330 to perform I/O link switching.

In a feasible implementation, when the processor 3113 detects again, via the transmission link detection module 301, that the status of the optical transmission path is the second fault state, the processor 3113 sends the I/O link indication switching information to the transceiver 3301 of the service device 330 via the second transceiver 3114.

S906: Forward the I/O link indication switching information.

Specifically, the switch 321 transparently transmits the received I/O link indication switching information to the transceiver 3301 of the service device 330.

S907: Complete the I/O link switching.

Specifically, the I/O switching module 3001 completes the I/O link switching based on the I/O link indication switching information, for example, switches from an I/O 1 to an I/O 2.

In a feasible implementation, the performance status information and the I/O non-switching event that are reported by the service device 330 may be directly reported to the second transceiver 3114 via the transceiver 3301, without forwarding of the switch 321.

In addition, the second training process may also be applied to the transmission device 312. Details are not described herein again.

It should be understood that, in the scenario of the second fault state, the I/O switching module 3001 is not triggered to complete the I/O link switching. However, in this scenario, because the service packet is lost during transmission, to ensure normal transmission of the service packet, the I/O link switching needs to be performed in this scenario. Based on the foregoing solution, in embodiments of this application, the mapping relationship between the fault mode and the performance status of the service device is established through the learning and training of the optical transmission device. Therefore a service packet loss is avoided and system performance is ensured.

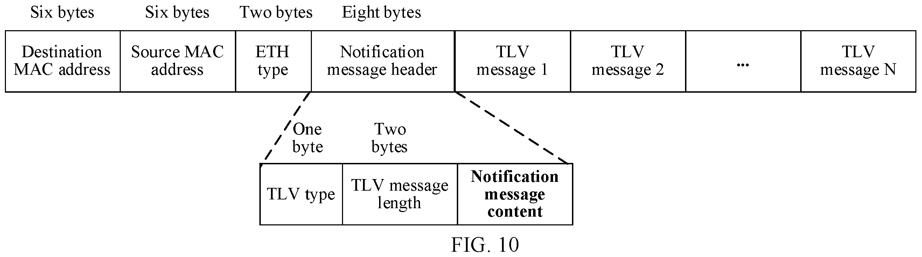

It should be understood that, in embodiments of this application, both the status information of the optical transmission path and the performance status information of the service device may be implemented by extending a currently used communication standard protocol. For example, the status information of the optical transmission path and the performance status information of the service device may be of a packet format shown in FIG. 10 that is obtained by extending a standard Ethernet (ethernet, ETH) packet and that is used for exchanging the status information of the optical transmission path and the service performance status information of the service device. For example, for the status information of the optical transmission path and the performance status information of the service device in embodiments of this application, a field that is in a type length value (type length value, TLV) in the ETH packet and that is used to carry content of a notification message. It should be understood that, for related descriptions of a media access control (media access control, MAC) address and another ETH packet in FIG. 10, refer to descriptions in conventional technologies. Details are not described herein.

In addition, in embodiments of this application, the status information of the optical transmission path and the performance status information of the service device may alternatively be carried in a fiber channel (fiber channel, FC) packet, or the like. In addition, to enhance reliability of the overall system, after a subscription device subscribes to the status information of the optical transmission path, the transmission device may continuously send protocol packets in real time, for example, send the protocol packets at an interval of 500 ms.

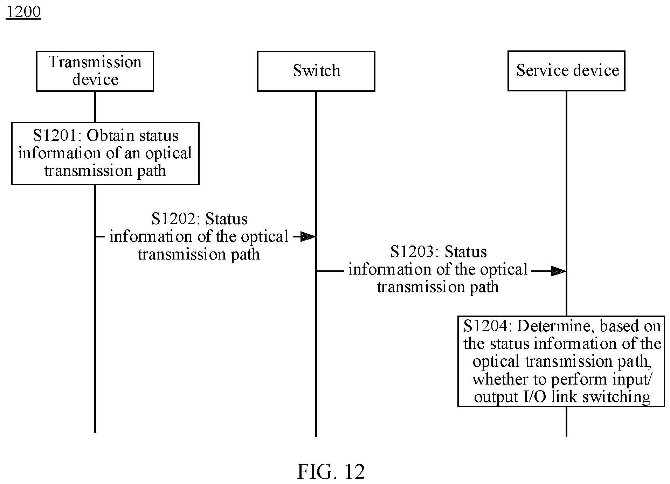

FIG. 12 is a schematic flowchart of a service transmission method 1200 according to an embodiment of this application. As shown in FIG. 12, the method includes the following steps.

S1201: Obtain status information of an optical transmission path.

Specifically, an optical transmission device obtains the status information of the optical transmission path.

S1202: Send the status information of the optical transmission path.

Specifically, the optical transmission device sends the status information of the optical transmission path to a switch.

S1203: Send the status information of the optical transmission path.

Specifically, the switch transparently transmits the status information of the optical transmission path to a service device.

S1204: Determine, based on the status information of the optical transmission path, whether to perform input/output I/O link switching.

Specifically, in a feasible implementation, when a transmission exception occurs on a service path and a protection path is not faulty, the service device switches from the working path to the protection path.

In another implementation, when a service path is faulty and a protection path is also faulty, the service device sends arbitration request information to a quorum server, to request to perform arbitration on the service device.

It should be noted that, the optical transmission device may send the status information of the optical transmission path to the service device over a directly connected link, to implement sending of the status information of the optical transmission path, without forwarding of the switch. In addition, for specific modules of the optical transmission device and the service device for performing steps, refer to the foregoing specific descriptions of the optical transmission device and the service device. Details are not described herein again.

In embodiments of this application, the processor may be a general-purpose processor, a digital signal processor, an application-specific integrated circuit, a field-programmable gate array or another programmable logic device, a discrete gate or transistor logic device, or a discrete hardware component, and can implement or perform the methods, steps, and logical block diagrams disclosed in embodiments of this application. The general-purpose processor may be a microprocessor, any conventional processor, or the like. The steps of the methods disclosed with reference to embodiments of this application may be directly performed by a hardware processor, or may be performed by a combination of hardware and software units in the processor.

Based on the foregoing embodiments, an embodiment of this application further provides a computer storage medium. The storage medium stores a software program. When the software program is read and executed by one or more processors, the method provided in any one or more of the foregoing embodiments may be implemented. The computer storage medium may include any medium that can store program code, such as a USB flash drive, a removable hard disk, a read-only memory, a random access memory, a magnetic disk, an optical disc, or the like.

Based on the foregoing embodiments, an embodiment of this application further provides a chip. The chip includes a processor, and the processor is configured to implement a function in any one or more of the foregoing embodiments, for example, obtain or process a data frame in the foregoing methods. Optionally, the chip further includes a memory, and the memory is configured to store necessary program instructions and data to be executed by the processor. The chip may include a chip, or include a chip and another discrete device.

The terms such as "module", "system", and the like used in this specification are used to indicate computer-related entities, hardware, firmware, combinations of hardware and software, software, or software being executed. For example, a component may be, but is not limited to, a process that runs on a processor, a processor, an object, an executable file, a thread of execution, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with another system through the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different devices to implement the described functions for each particular application, but it should not be considered that the implementation goes beyond the scope of this application.

It may be clearly understood by a person skilled in the art that, for ease and brief description, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and device may be implemented in another manner. For example, the described apparatus embodiments are merely examples. For example, division into the units is merely logical function division may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in an electronic form, a mechanical form, or another form.

The units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to conventional technologies, or some of the technical solutions may be implemented in a form of a software product. The computer software product is stored in a storage medium, and includes several instructions for instructing a computer device (which may be a personal computer, a server, a network device, or the like) to perform all or some of the steps of the devices described in embodiments of this application. The foregoing storage medium includes any medium that can store program code, such as a USB flash drive, a removable hard disk, a read-only memory (read-only memory, ROM), a random access memory (random access memory, RAM), a magnetic disk, an optical disc, or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An optical transmission device, comprising a first transceiver, an optical transceiver module, and a processor, wherein
the first transceiver is configured to receive a service packet from a switch;
the optical transceiver module is configured to send the service packet to a target optical transmission device; and
the processor is configured to: obtain status information of an optical transmission path for transmitting the service packet, and send the status information of the optical transmission path to a service device, wherein the service device is configured to generate the service packet.

2. The optical transmission device according to claim 1, wherein the device further comprises a second transceiver, and that the processor is configured to send the status information of the optical transmission path to a service device specifically comprises:
the processor is configured to send the status information of the optical transmission path to the service device via the second transceiver.

3. The optical transmission device according to claim 1 or 2, wherein
the processor is further configured to obtain subscription information, wherein the subscription information indicates the service device to request to subscribe to the status information of the optical transmission path.

4. The device according to any one of claims 1 to 3, wherein the processor is further configured to send input/output I/O link switching indication information, wherein the I/O link switching indication information indicates the service device to switch from a first I/O link to a second I/O link, the first I/O link is a link carrying the service packet, and the second I/O link is a protection link of the first I/O link.

5. A service device, comprising a transceiver and a processor, wherein
the transceiver is configured to: send a service packet, receive status information of a first optical transmission path from a first optical transmission device, receive status information of a second optical transmission path from a second optical transmission device, and send the status information of the first optical transmission path and the status information of the second optical transmission path to the processor; and
the processor is configured to determine, based on the status information of the first optical transmission path and the status information of the second optical transmission path, whether to perform input/output I/O link switching.

6. The device according to claim 5, wherein the status information of the first optical transmission path indicates that a transmission exception occurs on the first optical transmission path, the status information of the second optical transmission path indicates that the second optical transmission path is not faulty, and the processor is configured to switch from a first I/O link to a second I/O link, wherein the first I/O link is a link carrying the service packet, and the second I/O link is a protection link of the first I/O link.

7. The device according to claim 5, wherein the status information of the first optical transmission path indicates that the first optical transmission path is faulty, the status information of the second optical transmission path indicates that the second optical transmission path is faulty, and the processor is configured to send arbitration request information to a quorum server, wherein the arbitration request information is used to request to perform arbitration on the service device.

8. The device according to any one of claims 5 to 7, wherein the transceiver is further configured to receive I/O link switching indication information from the first optical transmission device, wherein the I/O link switching indication information indicates the service device to switch from the first I/O link to the second I/O link, the first I/O link is the link carrying the service packet, and the second I/O link is the protection link of the first I/O link.

9. The device according to any one of claims 5 to 8, wherein
that the transceiver is configured to receive status information of a first optical transmission path from a first optical transmission device specifically comprises: the transceiver is configured to receive the status information of the first optical transmission path from the first optical transmission device sent by a first switch; and
that the transceiver is configured to receive status information of a second optical transmission path from a second optical transmission device specifically comprises: the transceiver is configured to receive the status information of the second optical transmission path from the second optical transmission device sent by a second switch.

10. The device according to any one of claims 5 to 9, wherein the service device is a storage device, the storage device comprises a memory, and the memory is configured to store the service packet.

11. A service transmission method, comprising:
sending a service packet;
receiving status information of a first optical transmission path from a first optical transmission device, and receiving status information of a second optical transmission path from a second optical transmission device; and
determining, based on the status information of the first optical transmission path and the status information of the second optical transmission path, whether to perform input/output I/O link switching.

12. The method according to claim 11, wherein
when the status information of the first optical transmission path indicates that a transmission exception occurs on the first optical transmission path, and the status information of the second optical transmission path indicates that the second optical transmission path is not faulty, switching is performed from a first I/O link to a second I/O link, wherein the first I/O link is a link carrying the service packet, and the second I/O link is a protection link of the first I/O link.

13. The method according to claim 11, wherein
when the status information of the first optical transmission path indicates that the first optical transmission path is faulty, and the status information of the second optical transmission path indicates that the second optical transmission path is faulty, arbitration request information is sent to a quorum server, wherein the arbitration request information is used to request to perform arbitration on a service device.

14. The method according to any one of claims 11 to 13, wherein the method further comprises:
receiving I/O link switching indication information from the first optical transmission device, wherein the I/O link switching indication information indicates to switch from the first I/O link to the second I/O link, the first I/O link is the link carrying the service packet, and the second I/O link is the protection link of the first I/O link.

15. The method according to any one of claims 11 to 14, wherein
the status information of the first optical transmission path from the first optical transmission device sent by a first switch is received; and
the status information of the second optical transmission path from the second optical transmission device sent by a second switch is received.

16. The method according to any one of claims 11 to 15, wherein the method further comprises: storing the service packet.

17. A service transmission system, comprising a service device, a switch, and the optical transmission device according to any one of claims 1 to 4, wherein
the switch is configured to: receive a service packet from the service device, and send the service packet to the optical transmission device; and
the service device is the service device according to any one of claims 5 to 10.
